# EUROPEAN PATENT APPLICATION

(11) **EP 4 841 836 A1**
(43) Date of publication of application: **18.11.2026**
(21) Application number: 25213888.8
(22) Date of filing: 06.11.2025
(51) Int. Cl.: H02B 1/20, H02B 1/32, H02B 1/56

(54) **AC COMBINER BOX AND ENERGY STORAGE CONTAINER**

(30) Priority: 13.05.2025 CN 202510608391
(71) Applicant: Zhejiang Jinko Energy Storage Co., Ltd., Jiaxing, Zhejiang 314415 (CN)
(72) Inventor: GE, Shaorong, Haining City, Zhejiang, 314415 (CN); ZHANG, Luhua, Haining City, Zhejiang, 314415 (CN); SUN, Xuebing, Haining City, Zhejiang, 314415 (CN); WANG, Xiang, Haining City, Zhejiang, 314415 (CN); LIU, Shuozhen, Haining City, Zhejiang, 314415 (CN); WANG, Xiaojie, Haining City, Zhejiang, 314415 (CN)
(74) Representative: Ipsilon

(57) **Abstract**

An AC combiner box is disclosed, including: a main circuit breaker provided with a plurality of input wiring terminals, and a plurality of output wiring terminals extending in a first direction to a wiring area at a lower portion of the AC combiner box; and a plurality of sub-circuit breakers sequentially arranged at intervals in a horizontal direction to form a circuit breaker unit. A plurality of circuit breaker units are arranged at intervals and in parallel with each other in a vertical direction. Each circuit breaker copper busbar has an end connected to one output wiring terminal of one sub-circuit breaker, and another end forming an output wiring terminal in the wiring area. A plurality of circuit breaker copper busbars are arranged at intervals and connected to the output wiring terminals of the plurality of sub-circuit breakers in a one-to-one correspondence manner.

## Description

### TECHNICAL FIELD

The present disclosure relates to the field of energy storage system technologies, and more particularly, to an alternating current (AC) combiner box and an energy storage container.

### BACKGROUND

The energy storage container is a highly integrated energy storage system, which usually uses a standard container as a carrier, and integrates a battery pack, a battery management system (BMS), an energy management system (EMS), a power conversion system (PCS), a thermal management system, and fire-fighting equipment, or other core components. The AC combiner box is the core component for energy conversion, power distribution, and system integration in the power conversion system.

### SUMMARY

In a first aspect of the present disclosure, an AC combiner box is provided. The AC combiner box includes: a main circuit breaker provided with a plurality of input wiring terminals and a plurality of output wiring terminals, the plurality of output wiring terminals extending in a first direction to a wiring area at a lower portion of the AC combiner box; a plurality of sub-circuit breakers sequentially arranged at intervals in a horizontal direction to form a circuit breaker unit, a plurality of circuit breaker units being arranged at intervals and in parallel in with each other a vertical direction; a plurality of circuit breaker copper busbars, each of the plurality of circuit breaker copper busbars having an end connected to one output wiring terminal of one sub-circuit breaker, and another end forming an output wiring terminal in the wiring area at the lower portion of the AC combiner box, the plurality of circuit breaker copper busbars being arranged at intervals and connected to the output wiring terminals of the plurality of sub-circuit breakers in a one-to-one correspondence manner; and a plurality of main copper busbars, each of the plurality of main copper busbars being connected to one corresponding input wiring terminal of the main circuit breaker and one corresponding input wiring terminal of each of the plurality of sub-circuit breakers.

In some embodiments, the plurality of circuit breaker copper busbars includes a first circuit breaker copper busbar, a second circuit breaker copper busbar, and a third circuit breaker copper busbar. An end of the first circuit breaker copper busbar is connected to the sub-circuit breaker in a first target circuit breaker unit, and another end of the first circuit breaker copper busbar extends in the first direction to the wiring area at the lower portion of the AC combiner box to form the output wiring terminal. The first target circuit breaker unit is a circuit breaker unit of the plurality of circuit breaker units adjacent to the wiring area at the lower portion of the AC combiner box, and the first direction is a direction perpendicular to and directed to a bottom surface of the AC combiner box.

In some embodiments, the second circuit breaker copper busbar is provided with a connection portion extending in the first direction, a first bending portion extending in a second direction, and a second bending portion extending in a third direction, the second circuit breaker copper busbar is connected to a sub-circuit breaker in a second target circuit breaker unit. The second target circuit breaker unit is a circuit breaker unit of the plurality of circuit breaker units that is not blocked by the main circuit breaker in the first direction, the second direction is a direction that is horizontal and directed to a back panel of the AC combiner box, and the third direction is a direction that is horizontal and directed away from the back panel of the AC combiner box.

In some embodiments, the third circuit breaker copper busbar is provided with a connection portion extending in the first direction, a first bending portion extending in the second direction, a second bending portion extending in the third direction, and a third bending portion extending in a fourth direction, and the third circuit breaker copper busbar is connected to the sub-circuit breaker in a third target circuit breaker unit. The third target circuit breaker unit is a circuit breaker unit of the plurality of circuit breaker units that is blocked by the main circuit breaker in the extension directions of the plurality of copper busbars, and the fourth direction is a direction that is horizontal and directed to a side panel of the AC combiner box.

In some embodiments, the connection portion, the first bending portion and the second bending portion of the second circuit breaker copper busbar are fixedly connected together. The connection portion, the first bending portion, the second bending portion and the third bending portion of the third circuit breaker copper busbar are fixedly connected together. The first circuit breaker copper busbar, the second circuit breaker copper busbar, and the third circuit breaker copper busbar form a plurality of rows of output connection points arranged at intervals and in parallel with each other in the wiring area at the lower portion of the AC combiner box.

In some embodiments, the AC combiner box further includes insulating sleeves sleeved on non-fixed connection portions of the circuit breaker copper busbars. The first bending portions extending in the second direction include a plurality of first sub-bending portions which have different lengths in the vertical direction, and which are alternately arranged in a cycle so that the insulating sleeves are located on both sides of a fixed connection point. The second bending portions extending in the third direction have different lengths in the vertical direction and are alternately arranged in a cycle so that the insulating sleeves are located on both sides of the fixed connection point. The third bending portions extending in the fourth direction have different lengths in the horizontal direction, to form output connection points horizontally arranged at intervals in the wiring area at the lower portion of the AC combiner box.

In some embodiments, the AC combiner box further includes a plurality of insulating mounting frames and a plurality of insulator posts. The main circuit breaker and the plurality of sub-circuit breakers are secured to the plurality of insulating mounting frames, and the plurality of circuit breaker copper busbars are secured to the insulating mounting frames and/or other circuit breaker copper busbars through the plurality of insulator posts.

In some embodiments, a side wall of the AC combiner box is provided with a wiring hole, and an external cable is connected to the plurality of circuit breaker copper busbars at the wiring area through the wiring hole. The wiring hole is located at a position corresponding to the wiring area at the lower portion of the AC combiner box.

In some embodiments, the AC combiner box further includes a control box circuit breaker. The control box circuit breaker is provided at a position in the first target circuit breaker unit adjacent to the side wall, and an output terminal of the control box circuit breaker extends through the first circuit breaker copper busbar to the wiring area at the lower portion of the AC combiner box.

In some embodiments, the AC combiner box further includes a cooling air channel. The cooling air channel includes: an air-intake channel located at a bottom portion of the AC combiner box, with a plurality of openings formed above the air-intake channel corresponding to positions of the main circuit breaker and the plurality of sub-circuit breakers; and an air-exhaust channel located at a top portion of the AC combiner box, with a plurality of openings formed below the air-intake channel corresponding to the positions of the main circuit breaker and the plurality of sub-circuit breakers. A plurality of sub-cooling air channels is formed between the plurality of openings of the air-intake channel and the plurality of openings of the air-exhaust channel, and each sub-cooling air channel is configured to cool the plurality of sub-circuit breakers and the plurality of circuit breaker copper busbars in a path of the sub-cooling air channel.

In some embodiments, an air inlet of the air-intake channel is connected to an air outlet of an air-cooled air conditioner, and an air outlet of the air-exhaust channel is connected to an air inlet of the air-cooled air conditioner.

In some embodiments, one air deflector group is formed at a position of each opening of the air-intake channel, and each air deflector group includes a plurality of air deflectors arranged at intervals.

In some embodiments, an air deflector in each air deflector group closer to the air inlet of the air-intake channel has a shorter length, and an air deflector among air deflectors in the plurality of air deflector groups with the same position, closer to the air inlet of the air-intake channel has a shorter length, so that an amount of cold air emitted from each opening of the air-exhaust channel is the same.

In a second aspect of the present disclosure, an energy storage container is provided, including: a control box; an air-cooled air conditioner; and the AC combiner box according to the first aspect.

In some embodiments, an air outlet of the air-cooled air conditioner is connected to an air inlet of the control box through a pipe, the air-exhaust channel further includes an air-exhaust channel of the control box, the air-exhaust channel of the control box includes an air outlet of the control box, and the air outlet of the control box is connected to the air inlet of the air-cooled air conditioner.

In the above-mentioned AC combiner box and energy storage container, the special-shaped copper busbars are connected to the circuit breakers, and a cooling air channel is formed within the AC combiner box. As a result, at least the size of the AC combiner box can be reduced, and meanwhile the formation of the wiring area at the lower portion of the AC combiner box through the copper busbars can avoid the problem of inconvenient wiring caused by the reduction in the size of the AC combiner box, and also avoid the problem of abnormal heat dissipation of the AC combiner box due to the more dense arrangement of the circuit breakers and the copper busbars after the size of the AC combiner box is reduced.

### BRIEF DESCRIPTION OF THE DRAWINGS

To describe the technical solution in the embodiments of the present disclosure more clearly, the accompanying drawings required for describing the embodiments will be briefly described as follows. It is clear that the accompanying drawings in the following description show merely some embodiments of the present disclosure, and those skilled in the art may still derive accompanying drawings of other embodiments from these accompanying drawings without creative efforts.
FIG. 1 is a schematic diagram illustrating an AC combiner box according to an embodiment of the present disclosure.
FIG. 2 is another schematic diagram illustrating an AC combiner box according to an embodiment of the present disclosure.
FIG. 3 is a further schematic diagram illustrating an AC combiner box according to an embodiment of the present disclosure.
FIG. 4 is a further schematic diagram illustrating an AC combiner box according to an embodiment of the present disclosure.
FIG. 5 is a schematic diagram illustrating an air-intake channel according to an embodiment of the present disclosure.

Reference numerals:
101, main circuit breaker; 102, sub-circuit breaker; 104, main copper busbar; 105, first circuit breaker copper busbar; 106, second circuit breaker copper busbar; 107, third circuit breaker copper busbar; 108, connection portion extending in a first direction; 109, first bending portion extending in a second direction; 110, second bending portion extending in a third direction; 111, third bending portion extending in the fourth direction; 112, wiring area; 113, control box circuit breaker; 114, circuit breaker unit; 114a, first target circuit breaker unit; 114b, second target circuit breaker unit; 114c, third target circuit breaker unit; 201, fixed connection point; 202, insulator post fixed point; 203, insulating mounting frame; 204, insulator post; 301, air-intake channel; 302, air-exhaust channel; 303, sub-cooling air channel; 401, air outlet of air conditioner; 402, air inlet of air conditioner; 304, air deflector group; 403, AC combiner box; 404, control box; 405, air-cooled air conditioner.

### DETAILED DESCRIPTION

To facilitate understanding of the present disclosure, a more comprehensive description of the present disclosure will be provided below by referring to the relevant drawings. The drawings show the preferred embodiments of the present disclosure. However, the present disclosure can be implemented in many different forms and is not limited to the embodiments described herein. Rather, the purpose of providing these embodiments is to make the understanding of the present disclosure more thorough and comprehensive.

Unless otherwise defined, all the technical and scientific terms used herein have the same meanings as those commonly understood by technicians belonging to the technical field of the present disclosure. The terms used in the specification of the present disclosure are merely for the purpose of describing specific embodiments and are not intended to limit the present disclosure. As used herein, the term "and/or" includes any and all combinations of one or more of the listed items.

When using the terms "including", "having", and "comprising" described herein, unless explicitly limited terms such as "only", "consisting of", etc., are used, additional components can be added. Unless otherwise specified, the singular form of terms can include the plural form and should not be understood as referring to a single quantity.

It should be appreciated that although the terms "first", "second", etc., can be used herein to describe various components, these components should not be limited by these terms. These terms are merely used to distinguish one component from another. For example, without departing from the scope of the present disclosure, the first component can be referred to as the second component, and similarly, the second component can be referred to as the first component.

In the present disclosure, unless otherwise explicitly specified, the terms "connection", "coupling", etc., should be understood in a broad sense, such as a direct connection, or an indirect connection through an intermediate medium, or an internal connection or interaction relationship between two components. Those skilled in the field can learn the specific meanings of these terms in the present disclosure according to specific conditions.

The energy storage container is a highly integrated energy storage system, which usually uses a standard container as a carrier, and integrates a battery pack, a battery management system (BMS), an energy management system (EMS), a power conversion system (PCS), a thermal management system, a fire-fighting equipment, or other core components. An alternating current (AC) combiner box is a core component for energy conversion, power distribution, and system integration in the power conversion system.

In the conventional technologies, due to the increasing demand for the miniaturization and the energy storage capacity of the energy storage container, the space required for the battery pack is getting larger and larger, while the size of the power conversion system is getting smaller and smaller, especially, there are more and more restrictions on the width of the PCS. Accordingly, how to reduce the size of the AC combiner box has become a problem to be solved for the energy storage container.

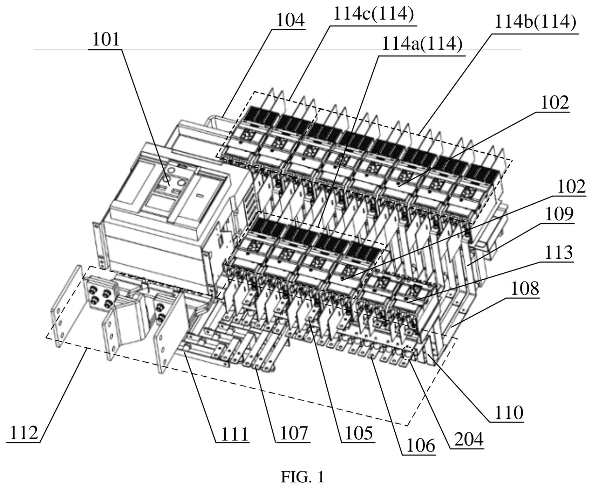

In the present disclosure, an AC combiner box 403 is provided. Referring to FIGS. 1 to 2, the AC combiner box 403 includes a main circuit breaker 101, a sub-circuit breaker 102, a circuit breaker copper bus, and a main copper busbar 104.

The main circuit breaker 101 is provided with a plurality of input wiring terminals and a plurality of output wiring terminals. The plurality of output wiring terminals extends in a first direction to a wiring area 112 at a lower portion of the AC combiner box 403.

For example, referring to FIGS. 1 to 2 again, three-phase circuit breakers are taken as an example in the present disclosure. The main circuit breaker 101 and the sub-circuit breaker 102 both have three input terminals and three output terminals.

The number of input or output terminals of the circuit breaker is not limited here, which can be selected according to actual requirements.

A plurality of sub-circuit breakers 102 are provided. The plurality of sub-circuit breakers 102 are sequentially arranged at intervals in the horizontal direction to form a circuit breaker unit 114. There are a plurality of circuit breaker units 114, and the plurality of circuit breaker units 114 are arranged at intervals and in parallel with each other in the vertical direction.

The number of sub-circuit breakers 102 in each circuit breaker unit 114 and the number of circuit breaker units 114 can be set according to the actual size of the AC combiner box 403.

In such a manner, in the present disclosure, the sub-circuit breakers 102 are arranged in multiple rows, spaced apart in the horizontal direction instead of being arranged in a single row, thereby saving a lot of transverse space.

A plurality of circuit breaker copper busbars are provided. An end of each circuit breaker copper busbar is connected to one output wiring terminal of one sub-circuit breaker 102, and another end forms an output wiring terminal in the wiring area 112 at the lower portion of the AC combiner box 403. The plurality of circuit breaker copper busbars are arranged at intervals and are connected to the output wiring terminals of the plurality of sub-circuit breakers 102 in a one-to-one correspondence manner.

The plurality of circuit breaker copper busbars spaced apart are connected to the plurality of sub-circuit breakers correspondingly, which ensures an insulation gap between the circuit breaker copper busbars and also facilitates the operator to identify a sub-circuit breaker corresponding to a circuit breaker copper busbar when wiring.

Specifically, referring to FIG. 1 again, the plurality of circuit breaker copper busbars includes a first circuit breaker copper busbar 105, a second circuit breaker copper busbar 106, and a third circuit breaker copper busbar 107. The plurality of circuit breaker unit 114 includes a first target circuit breaker unit 114a, a second target circuit breaker unit 114b and a third target circuit breaker unit 114c.

An end of the first circuit breaker copper busbar 105 is connected to a sub-circuit breaker 102 in the first target circuit breaker unit 114a, and another end of the first circuit breaker copper busbar 105 extends in the first direction to the wiring area 112 at the lower portion of the AC combiner box 403 to form an output wiring terminal.

The first target circuit breaker unit 114a is a circuit breaker unit 114 of the plurality of circuit breaker units 114 adjacent to the wiring area 112 at the lower portion of the AC combiner box 403. The first direction is a direction perpendicular to and directed to a bottom surface of the AC combiner box 403.

Specifically, referring to FIG. 1 again, the second circuit breaker copper busbar 106 has a connection portion 108 extending in the first direction, a first bending portion 109 extending in the second direction, and a second bending portion 110 extending in the third direction. The second circuit breaker copper busbar 106 is connected to a sub-circuit breaker 102 in the second target circuit breaker unit 114b.

The second target circuit breaker unit 114b is a circuit breaker unit 114 of the plurality of circuit breaker units 114 that is not blocked by the main circuit breaker 101 in extension directions of the plurality of circuit breaker copper busbars, especially in the first direction. The second direction is a direction that is horizontal and directed to a back panel of the AC combiner box 403, and the third direction is a direction that is horizontal and directed away from the back panel of the AC combiner box 403.

In such a manner, through a shape formed by the connection portion 108 of the second circuit breaker copper busbar 106 extending in the first direction, the first bending portion 109 of the second circuit breaker copper busbar 106 extending in the second direction, and the second bending portion 110 of the second circuit breaker copper busbar 106 extending in the third direction, the second circuit breaker copper busbar 106 extends across the sub-circuit breaker 102 located below the second target circuit breaker unit 114b by utilizing a thickness direction of the AC combiner box 403, to form a wiring terminal in the wiring area 112. As a result, it avoids the problem that it is difficult for the operator to connect the wiring terminals of the circuit breakers due to a dense arrangement of the circuit breakers after multiple rows of circuit breakers are formed.

Specifically, referring to FIG. 1 again, the third circuit breaker copper busbar 107 has a connection portion 108 extending in the first direction, a first bending portion 109 extending in the second direction, a second bending portion 110 extending in the third direction, and a third bending portion 111 extending in the fourth direction. The third circuit breaker copper busbar 107 is connected to the sub-circuit breaker 102 in the third target circuit breaker unit 114c.

The third target circuit breaker unit 114c is a circuit breaker unit 114 of the plurality of circuit breaker units 114 that is blocked by the main circuit breaker 101 in the extension directions of the plurality of circuit breaker copper busbars, especially in the first direction. The fourth direction is a direction that is horizontal and is directed to a side panel of the AC combiner box 403.

Due to the blocking of the main circuit breaker 101, the third circuit breaker copper busbar 107 cannot directly extend downward to the wiring area 112, and it is required to provide the third bending portion 111 extending in the fourth direction so that the third circuit breaker copper busbar 107 extend across the main circuit breaker 101 in the width direction after extending across the main circuit breaker 101 or the sub-circuit breaker 102 in the thickness direction, to form the wiring terminal in the wiring area 112.

Due to the dense arrangement of the main circuit breaker 101 and the sub-circuit breakers 102, the main circuit breaker blocks copper busbar paths of some of the sub-circuit breakers extending downward through the copper busbars to the wiring area. It is still not convenient for wiring even if the blocked copper busbars extend directly to the main circuit breaker copper busbar. In the present disclosure, by using the third bending portion, the copper busbar extends to the wiring area by bypassing the main circuit breaker. As a result, it does not only facilitate the wiring of the main circuit breaker but also facilitate the wiring of the sub-circuit breakers in the third target circuit breaker unit 114c, thereby ensuring the applicability of the AC combiner box 403.

Specifically, the connection portion 108, the first bending portion 109 and the second bending portion 110 of the second circuit breaker copper busbar 106 are fixedly connected together. The connection portion 108, the first bending portion 109, the second bending portion 110 and the third bending portion 111 of the third circuit breaker copper busbar 107 are fixedly connected together. The first circuit breaker copper busbar 105, the second circuit breaker copper busbar 106, and the third circuit breaker copper busbar 107 form a plurality of rows of output connection points arranged at intervals and in parallel with each other in the wiring area 112 at the lower portion of the AC combiner box 403.

In such a manner, the output connection points are all formed in the lower portion of the AC combiner box 403, which can reduce the width of the AC combiner box 403 by arranging multiple rows of circuit breakers, while still not increasing the difficulty of wiring through the arrangement of the copper busbars, thereby ensuring the applicability of the AC combiner box 403.

Further, positions where the plurality of rows of output connection points are formed in the wiring area 112 at the lower portion of the AC combiner box 403 may correspond to the positions of the sub-circuit breakers 102. For example, the output connection points corresponding to the uppermost circuit breaker unit 114 may be formed at a position closest to the back panel, while the output connection points corresponding to the lowermost circuit breaker unit 114 may be formed at a position farthest from the back panel. As a result, it can avoid the problem that it is difficult for the operator to correspond the multiple output connection points to the circuit breakers.

As an example, when a plurality of rows of sub-circuit breakers are formed in the AC combiner box 403, a plurality of rows of output connection points are also formed at the wiring terminal of the AC combiner box 403. The number of the rows of output connection points corresponds to the number of the rows of sub-circuit breakers, and the arrangement of each row of output connection points is the same as the arrangement of the sub-circuit breakers. For example, when there are three three-phase sub-circuit breakers spaced apart from each other and arranged in one row of sub-circuit breakers, in a row of output connection points corresponding to the one row of sub-circuit breakers, the first three output connection points are the three output connection points for the first three-phase sub-circuit breaker, the 4th to 6th output connection points are the three output connection points for the second three-phase sub-circuit breaker, and the last three output connection points are the three output connection points for the third three-phase sub-circuit breaker.

In such a manner, when the operator performs wiring, it is possible to determine which connection point of which sub-circuit breaker is connected only according to the position of the output connection point, and it is not necessary to determine which connection point of which sub-circuit breaker corresponds to this connection point according to the structure diagram of the AC combiner box or find the path of the copper busbar.

In an embodiment, among the plurality of rows of output connection points, a row of output connection points that is farthest from the back panel has the shortest length, that is, the row of output connection points is farthest from the bottom portion. A row of output connection points that is closest to the back panel has the longest length, that is, the row of output connection points is closest to the bottom portion. Such arrangement is more convenient for the operator to perform the wiring.

As an example, when a plurality of rows of sub-circuit breakers is formed in the AC combiner box 403, a plurality of rows of output connection points are also formed at the wiring terminal of the AC combiner box. The number of the rows of output connection points corresponds to the number of the rows of sub-circuit breakers. The arrangement of each row of output connection points is the same as the arrangement of the sub-circuit breakers, so that the plurality of rows of output connection points are formed. For example, when three rows of sub-circuit breakers are formed in the AC combiner box 403, the output connection points for the bottom row of sub-circuit breakers have the shortest length and form a row of connection points that is farthest from the back panel. The output connection points for the top row of sub-circuit breakers have the longest length and are closest to the bottom portion. The output connection points for the middle row of sub-circuit breakers form the middle row of connection points. Accordingly, for the three rows of sub-circuit breakers in the AC combiner box 403, three rows of output connection points that are staggered are formed in the wiring area of the AC combiner box 403. In such a manner, no matter which connection point the operator connects the wires to, it will not be affected by other output connection points, which makes it more convenient for the operator to perform the wiring.

A plurality of main copper busbars 104 are provided. Each main copper busbar 104 is connected to one corresponding input wiring terminal of the main circuit breaker 101, and is also connected to one corresponding input wiring terminal of each sub-circuit breaker 102.

It should be noted that the number of the main copper busbars 104 is related to the number of phases of the main circuit breaker 104. For example, if a three-phase circuit breaker is used as the main circuit breaker 104, the number of the main copper busbars 104 is three.

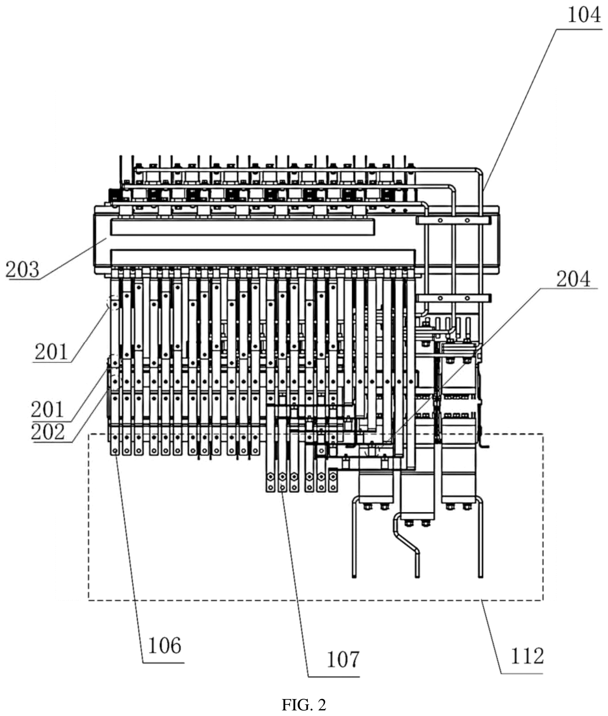

Referring to FIG. 2, since the sub-circuit breakers 102 are arranged in two rows, the main copper busbar 104 is substantially C-shaped. When the sub-circuit breakers 102 are arranged in three rows, the main copper busbar 104 is substantially E-shaped. When the sub-circuit breakers 102 are arranged in more rows, only additional horizontal main copper busbars 104 need to be added in the vertical direction. The horizontal size of the main copper busbar 104 is related to the position of the sub-circuit breaker 102, and each main copper busbar 104 needs to horizontally extend to cover the corresponding position of each sub-circuit breaker 102 to facilitate the connection between the sub-circuit breaker 102 and the main copper busbar 104.

To ensure the insulation effect between the plurality of main copper busbars 104, the plurality of main copper busbars 104 are arranged to be spaced apart from each other in a direction away from the back panel, which ensures a longitudinal spacing distance between the plurality of main copper busbars 104 and a spacing distance between the plurality of main copper busbars 104 in the thickness direction of the AC combiner box, thereby further utilizing the thickness of the AC combiner box to achieve the effect of enhancing the insulation distance between the plurality of main copper busbars 104.

Referring to FIG. 2 again, insulating sleeves (not illustrated) are further provided in the AC combiner box 403, which are sleeved on non-fixed connection portions of the circuit breaker copper busbars.

Referring to FIGS. 1 to 2, the first bending portions 109 extending in the second direction include a plurality of first sub-bending portions which have different lengths in the vertical direction and are alternately arranged in a cycle so that the insulating sleeves are located on both sides of the fixed connection point 201.

Referring to FIG. 2 again, the second bending portions 110 extending in the third direction have different lengths in the vertical direction and are alternately arranged in a cycle so that the insulating sleeves are located on both sides of the fixed connection point 201.

In such a manner, the copper busbars are each covered with the insulating sleeves on both sides of the fixed connection point 201, which avoids the problem of insulation abnormalities due to too small spacing distance between the copper busbars.

Referring to FIGS. 1 to 2, the third bending portions 111 extending in the fourth direction have different lengths in the horizontal direction, to form output connection points horizontally arranged at intervals in the wiring area 112 at the lower portion of the AC combiner box 403.

In such a manner, the overlap of the output connection points is avoided by providing the third bending portions 111 of different lengths.

Optionally, the length of the third bending portion 111 can be determined according to the position of the sub-circuit breaker 102, so that the position of the output connection point corresponds to the position of the sub-circuit breaker 102, which is more convenient for the operator to perform the wiring.

Referring to FIGS. 1 to 2 again, the AC combiner box 403 further includes a plurality of insulating mounting frames 203 and a plurality of insulator posts 204.

The main circuit breaker 101 and the sub-circuit breakers 102 are secured to the plurality of insulating mounting frames 203, and the circuit breaker copper busbars are secured to the insulating mounting frames 203 and/or other circuit breaker copper busbars through the plurality of insulator posts 204.

It should be noted that both the insulator post fixed point 202 and the insulating sleeves on the copper busbars can be arranged, so that the positions of the insulator posts 204 do not need to be arranged in a staggered manner like the fixed connection points 201.

Refer to FIGS. 1-2 again, a side wall of the AC combiner box 403 is provided with a wiring hole, and an external cable is connected to the copper busbar in the wiring area 112 through the wiring hole.

The wiring hole is located at a position corresponding to the wiring area 112 at the lower portion of the AC combiner box 403.

Refer to FIGS. 1 to 2 again, the AC combiner box 403 further includes a control box circuit breaker 113.

The control box circuit breaker 113 is arranged at a position in the first target circuit breaker unit 114a adjacent to the side wall. An output terminal of the control box circuit breaker 113 extends through the first circuit breaker copper busbar 105 to the wiring area 112 at the lower portion of the AC combiner box 403.

In order to facilitate connection between the control box circuit breaker 113 and the control box, the control box circuit breaker 113 needs to be arranged at the bottommost row adjacent to a side of the control box. Accordingly, a copper busbar for the control box circuit breaker 113 requires the output terminal to extend through the first circuit breaker copper busbar 105 to the wiring area 112 at the lower portion of the AC combiner box 403.

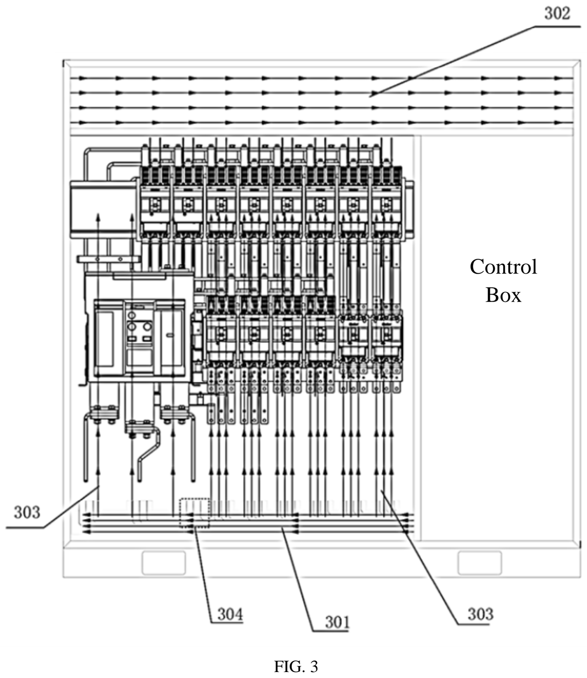

Referring to FIGS. 3 to 4, the AC combiner box 403 further includes a cooling air channel.

The cooling air channel includes: an air-intake channel 301 located at the bottom portion of the AC combiner box 403, with a plurality of openings formed above the air-intake channel 301 corresponding to the positions of the plurality of circuit breakers; an air-exhaust channel 302 located at the top portion of the AC combiner box 403, with a plurality of openings formed below the air-intake channel 302 corresponding to the positions of the plurality of circuit breakers; and a plurality of sub-cooling air channels formed between the plurality of openings of the air-intake channel 301 and the plurality of openings of the air-exhaust channel 302. Each sub-cooling air channel 303 is configured to cool the plurality of sub-circuit breakers 102 and the plurality of circuit breaker copper busbars in a path of the sub-cooling air channel.

An air inlet of the air-intake channel 301 is connected to an air outlet of the air-cooled air conditioner 405, and an air outlet of the air-exhaust channel 302 is connected to an air inlet of the air-cooled air conditioner 405.

In such a manner, the problem of abnormal heat dissipation of the AC combiner box 403 due to the more dense arrangement of circuit breakers and copper busbars after the size of the AC combiner box 403 is reduced is avoided.

Referring to FIG. 3 again, one air deflector group 403 is formed at a position of each opening of the air-intake channel 301, and each air deflector group 403 includes a plurality of air deflectors spaced apart.

An air deflector in each air deflector group 304 closer to the air inlet of the air-intake channel 301 has a shorter length. An air deflector among air deflectors in the plurality of air deflector groups with the same position, closer to the air inlet of the air-intake channel 301 has a shorter length, so that an amount of cold air emitted from each opening of the air-exhaust channel 302 is the same.

Due to the influence of airflow pressure and airflow speed, a plurality of air deflectors is arranged at the openings of the air-intake channel, so that the amount of the airflow from each opening of the air-intake channel is the same.

Referring to FIGS. 3 to 5, as an example, each group of air deflectors corresponds to one cooling opening, and the size of each cooling opening is the same. An air deflector of the plurality of air deflectors in each air deflector group closer to the air inlet of the air-intake channel has a shorter length, and is farther away from the bottom portion of the air-intake channel. Among air deflectors in the plurality of air deflector groups with the same position, an air deflector closer to the air inlet of the air-intake channel has a shorter length, and is farther away from the bottom portion of the air-intake channel. Since there is a greater airflow speed and a less airflow pressure at the position closer to the air inlet, and there is a less airflow speed and a greater airflow speed at the position farther from the air inlet, a longer air deflector is required at the position farther from the air inlet to obtain a sufficient amount of air. As a result, it ensures that each air deflector group 304 can intercept the same amount of air, and it also ensures the cooling effect of the air-intake channel on the AC combiner box 403, and a more uniform air amount of each cooling channel corresponding to each cooling opening.

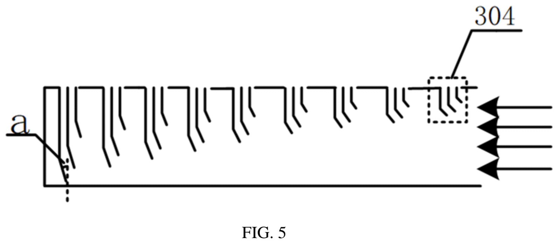

As an example, referring to FIG. 5, one air deflector group 304 may include three air deflectors. The air deflector group closest to the air inlet is denoted as a first group one, and the air deflector group farthest from the air inlet is denoted as a ninth group. In each air deflector group, the air deflector closest to the air inlet is determined as a first air deflector, and an air deflector farthest from the air inlet is determined as a third air deflector. For example, in the first group, the length of the first air deflector is shorter than that of the second air deflector, and the length of the second air deflector is shorter than that of the third air deflector. For another example, the comparison is performed between the first group and the second group. The length of the first air deflector in the first group is shorter than that of the first air deflector in the second group, the length of the second air deflector in the first group is shorter than that of the second air deflector in the second group, and the length of the third air deflector in the first group is shorter than that of the third air deflector in the second group.

Further, referring to FIG. 5 again, each air deflector includes a vertical portion and an inclined portion. The vertical portion may have a fixed length. The lengths of the vertical portions of the plurality of air deflectors in the second group may be 5% to 8% longer than the lengths of the vertical portions of the plurality of air deflectors in the first group. In such a manner, the initial balance of overall airflow resistance of air outlets is achieved by compensating the air attenuation through the lengths of the vertical portions. Inclination angles of the inclined portions may be different. Different inclination angles can compensate the local pressure loss caused by the length difference, which further reduces the airflow deviation at the air outlets. Taking nine air deflector groups as an example, the inclination angles of the inclined portions of the air deflectors in the first to third air deflector groups closer to the air inlet can be in a range of 25° to 40°, the inclination angles of the inclined portions of the air deflectors in the seven to ninth air deflector groups further from the air inlet can be in a range of 15° to 30°, and the inclination angles of the inclined portions of the air deflectors in the fourth to sixth air deflector groups in the middle can be in a range of 20° to 35°.

The inclination angle of the inclined portion is an angle *a* formed by the bottom end of the inclined portion and the vertical line perpendicular to bottom surface of the AC combiner box.

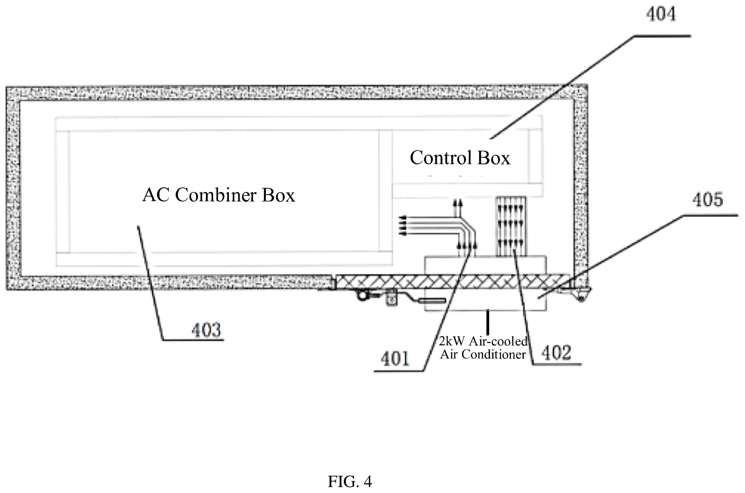

Referring to FIG. 4, in an exemplary embodiment, an energy storage container is provided, which includes a control box, an air-cooled air conditioner 405, and the AC combiner box 403 according to any of the above embodiments.

Referring to FIG. 4 again, since the air-cooled air conditioner 405, the control box, and the AC combiner box 403 need to be arranged in the same space, in the present disclosure the thickness of the control box is reduced and the air-cooled air conditioner 405 is integrated at a position corresponding to the control box on the door, so that after the door is closed, the energy storage container forms a regular rectangular prism, and there is no need to arrange an external unit of the air conditioner in other positions.

Specifically, an air outlet 401 of the air-cooled air conditioner 405 is further connected to an air inlet of the control box through a pipe. The air-exhaust channel 302 further includes an air-exhaust channel of the control box, and the air-exhaust channel of the control box includes an air outlet of the control box. The air outlet of the control box is connected to the air inlet 402 of the air-cooled air conditioner 405.

Referring to FIGS. 3 to 4, the air-exhaust channel of the control box and the air-exhaust channel 302 of the AC combiner box 403 can be integrated together, and both are connected to the air inlet of the air conditioner 402.

In the AC combiner box 403 and the energy storage container according to the above embodiments, the special-shaped copper busbars are connected to the circuit breakers, and a cooling air channel is formed within the AC combiner box 403. As a result, at least the size of the AC combiner box 403 can be reduced, and meanwhile the formation of the wiring area 112 at the lower portion of the AC combiner box 403 through the copper busbars can avoid the problem of inconvenient wiring caused by reduction in the size of the AC combiner box 403, and also avoid the problem of abnormal heat dissipation of the AC combiner box 403 due to the more dense arrangement of the circuit breakers and the copper busbars after the size of the AC combiner box 403 is reduced.

Please note that the above embodiments are only for illustrative purposes and are not intended to limit the present disclosure.

The embodiments in the present specification are described progressively, and each embodiment mainly highlights the differences from other embodiments. The same or similar parts between the embodiments can be referred to each other.

The technical features in the above embodiments can be combined arbitrarily. To make the description concise, not all possible combinations of the technical features in the above embodiments are described. However, as long as there is no conflict in the combinations of these technical features, these combinations should be considered as falling within the scope of the present disclosure.

The technical features in the above-mentioned embodiments may be combined in any manner. To simplify the description, all possible combinations of the technical features in the above-mentioned embodiments are not described. However, as long as there is no contradiction in the combinations of the technical features, these combinations all should be considered as the scope of the present disclosure.

The above embodiments represent only several implementation modes of the present disclosure, and the description thereof is specific and detailed, but cannot be understood as a limitation on the scope of the present disclosure. It should be noted that those skilled in the art can make some modifications and improvements without departing from the concept of the present disclosure, which all fall within the protection scope of the present disclosure. Therefore, the protection scope of the present disclosure shall be subject to the appended claims.

## Claims

1. An alternating current, AC, combiner box (403), comprising:
a main circuit breaker (101) provided with a plurality of input wiring terminals and a plurality of output wiring terminals, the plurality of output wiring terminals extending in a first direction to a wiring area (112) at a lower portion of the AC combiner box (403);
a plurality of sub-circuit breakers (102) sequentially arranged at intervals in a horizontal direction to form a circuit breaker unit (114), a plurality of circuit breaker units (114) being arranged at intervals and in parallel with each other in a vertical direction;
a plurality of circuit breaker copper busbars, each of the plurality of circuit breaker copper busbars having an end connected to one output wiring terminal of one sub-circuit breaker (102), and another end forming an output wiring terminal in the wiring area (112) at the lower portion of the AC combiner box (403), the plurality of circuit breaker copper busbars being arranged at intervals and connected to the output wiring terminals of the plurality of sub-circuit breakers (102) in a one-to-one correspondence manner; and
a plurality of main copper busbars (104), each of the plurality of main copper busbars (104) being connected to both one corresponding input wiring terminal of the main circuit breaker (101) and one corresponding input wiring terminal of each of the plurality of sub-circuit breakers (102).

2. The AC combiner box (403) of claim 1, wherein the plurality of circuit breaker copper busbars comprises a first circuit breaker copper busbar (105), a second circuit breaker copper busbar (106), and a third circuit breaker copper busbar (107);
wherein an end of the first circuit breaker copper busbar (105) is connected to the sub-circuit breaker (102) in a first target circuit breaker unit (114a), and another end of the first circuit breaker copper busbar (105) extends in the first direction to the wiring area (112) at the lower portion of the AC combiner box (403) to form the output wiring terminal; and
wherein the first target circuit breaker unit (114a) is a circuit breaker unit (114) of the plurality of circuit breaker units (114) adjacent to the wiring area (112) at the lower portion of the AC combiner box (403), and the first direction is a direction perpendicular to and directed to a bottom surface of the AC combiner box (403).

3. The AC combiner box (403) of claim 2, wherein the second circuit breaker copper busbar (106) is provided with a connection portion (108) extending in the first direction, a first bending portion extending in a second direction, and a second bending portion extending in a third direction, and the second circuit breaker copper busbar (106) is connected to the sub-circuit breaker (102) in a second target circuit breaker unit (114b); and
wherein the second target circuit breaker unit (114b) is a circuit breaker unit (114) of the plurality of circuit breaker units (114) that is not blocked by the main circuit breaker (101) in the first direction, the second direction is a direction that is horizontal and directed to a back panel of the AC combiner box (403), and the third direction is a direction that is horizontal and directed away from the back panel of the AC combiner box (403).

4. The AC combiner box (403) of claim 3, wherein the third circuit breaker copper busbar (107) is provided with a connection portion (108) extending in the first direction, a first bending portion (109) extending in the second direction, a second bending portion (110) extending in the third direction, and a third bending portion (111) extending in a fourth direction, and the third circuit breaker copper busbar (107) is connected to the sub-circuit breaker (102) in a third target circuit breaker unit (114c);
wherein the third target circuit breaker unit (114c) is a circuit breaker unit (114) of the plurality of circuit breaker units (114) that is blocked by the main circuit breaker (101) in the first direction, and the fourth direction is a direction that is horizontal and is directed to a side panel of the AC combiner box (403).

5. The AC combiner box (403) of claim 4, wherein the connection portion (108), the first bending portion (109) and the second bending portion (110) of the second circuit breaker copper busbar (106) are fixedly connected together;
wherein the connection portion (108), the first bending portion (109), the second bending portion (110) and the third bending portion (111) of the third circuit breaker copper busbar (107) are fixedly connected together; and
wherein the first circuit breaker copper busbar (105), the second circuit breaker copper busbar (106), and the third circuit breaker copper busbar (107) form a plurality of rows of output connection points arranged at intervals and in parallel with each other in the wiring area (112) at the lower portion of the AC combiner box (403).

6. The AC combiner box (403) of claim 4 or 5, further comprising insulating sleeves sleeved on non-fixed connection portions of the plurality of circuit breaker copper busbars,
wherein the first bending portions (109) extending in the second direction comprise a plurality of first sub-bending portions which have different lengths in the vertical direction, and which are alternately arranged in a cycle so that the insulating sleeves are located on both sides of a fixed connection point (201);
wherein the second bending portions (110) extending in the third direction have different lengths in the vertical direction and are alternately arranged in a cycle so that the insulating sleeves are located on both sides of the fixed connection point (201); and
wherein the third bending portions (111) extending in the fourth direction have different lengths in the horizontal direction, to form output connection points horizontally arranged at intervals in the wiring area (112) at the lower portion of the AC combiner box (403).

7. The AC combiner box (403) of any one of claims 1 to 6, further comprising a plurality of insulating mounting frames (203) and a plurality of insulator posts (204),
wherein the main circuit breaker (101) and the plurality of sub-circuit breakers (102) are secured to the plurality of insulating mounting frames (203), and the plurality of circuit breaker copper busbars are secured to the insulating mounting frames (203) and/or other circuit breaker copper busbars through the plurality of insulator posts (204).

8. The AC combiner box (403) of any one of claims 1 to 7, wherein a side wall of the AC combiner box (403) is provided with a wiring hole, and an external cable is connected to the plurality of circuit breaker copper busbars at the wiring area (112) through the wiring hole; and
wherein the wiring hole is located at a position corresponding to the wiring area (112) at the lower portion of the AC combiner box (403).

9. The AC combiner box (403) of claim 2, further comprising a control box circuit breaker (113),
wherein the control box circuit breaker (113) is arranged at a position in the first target circuit breaker unit (114a) adjacent to the side wall, and an output terminal of the control box circuit breaker (113) extends through the first circuit breaker copper busbar (106) to the wiring area (112) at the lower portion of the AC combiner box (403).

10. The AC combiner box (403) of any one of claims 1 to 9, further comprising a cooling air channel,
wherein the cooling air channel comprises:
an air-intake channel (301) located at a bottom portion of the AC combiner box (403), with a plurality of openings formed above the air-intake channel (301) corresponding to positions of the main circuit breaker (101) and the plurality of sub-circuit breakers (102); and
an air-exhaust channel (302) located at a top portion of the AC combiner box (403), with a plurality of openings formed below the air-intake channel (301) corresponding to the positions of the main circuit breaker (101) and the plurality of sub-circuit breakers (102); and
wherein a plurality of sub-cooling air channels (303) are formed between the plurality of openings of the air-intake channel (301) and the plurality of openings of the air-exhaust channel (302), and each sub-cooling air channel (303) is configured to cool the plurality of sub-circuit breakers (102) and the plurality of circuit breaker copper busbars in a path of the sub-cooling air channel (303).

11. The AC combiner box (403) of claim 10, wherein an air inlet of the air-intake channel (301) is connected to an air outlet (401) of an air-cooled air conditioner, and an air outlet of the air-exhaust channel (302) is connected to an air inlet (402) of the air-cooled air conditioner.

12. The AC combiner box (403) of claim 10 or 11, wherein one air deflector group (304) is formed at a position of each opening of the air-intake channel (301), and each air deflector group (304) comprises a plurality of air deflectors arranged at intervals.

13. The AC combiner box (403) of any one of claims 10 to 12, wherein an air deflector in each air deflector group (304) closer to the air inlet of the air-intake channel (301) has a shorter length, and an air deflector among air deflectors in the plurality of air deflector groups (304) with the same position, closer to the air inlet of the air-intake channel (301) has a shorter length, so that an amount of cold air emitted from each opening of the air-exhaust channel (302) is the same.

14. An energy storage container, comprising:
a control box (404);
an air-cooled air conditioner (405); and
the AC combiner box (403) of any one of claims 1 to 13.

15. The energy storage container of claim 14, wherein an air outlet (401) of the air-cooled air conditioner (405) is connected to an air inlet of the control box (404) through a pipe, the air-exhaust channel (302) further comprises an air-exhaust channel of the control box (404), the air-exhaust channel of the control box (404) comprises an air outlet of the control box (404), and the air outlet of the control box (404) is connected to the air inlet (402) of the air-cooled air conditioner (405).
